(19) Europäisches Patentamt
European Patent Office
Office européen des brevets

(11) **EP 3 437 822 A1**

(12) **EUROPEAN PATENT APPLICATION**

(43) Date of publication:
**06.02.2019 Bulletin 2019/06**

(21) Application number: **18185235.1**

(22) Date of filing: **24.07.2018**

(51) Int Cl.:
*B29C 45/18* (2006.01)     *B29B 13/06* (2006.01)
*B29C 45/76* (2006.01)     *F26B 21/04* (2006.01)
*F26B 21/06* (2006.01)     *F26B 21/12* (2006.01)
*B29C 45/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.07.2017  IT 201700087246**

(71) Applicant: **Moretto S.P.A.**
**35010 Massanzago (Padova) (IT)**

(72) Inventor: **MORETTO, Renato**
**I-35010 Massanzago, PADOVA (IT)**

(74) Representative: **Zanettin, Gianluigi**
**Jacobacci & Partners S.p.A.**
**Via Berchet, 9**
**35131 Padova (IT)**

(54) **METHOD AND SYSTEM FOR INJECTION MOLDING OF PLASTIC MATERIAL IN GRANULAR FORM**

(57)     The invention relates to an injection molding method of plastic material in granular form, comprising the following operating steps: a) providing at least one injection molding press 200; b) providing a dehumidification system which in turn: - at least one hopper 10; 70, 80, 90, 100 for containing the granular material; - at least one generator 20; 120, 130, 140, 150 of dry air fluidically connected to the hopper; and - an electronic control unit 300, designed to regulate the flow rate Q of the dry air flow. The method further comprises the following steps: c) setting in the electronic control unit the type of plastic material contained; d) injection molding the plastic material; e) generating a dry air flow through the hopper; f) regulating the flow rate Q of the dry air in proportion to the flow rate m of plastic material processed by the press (200) during the molding step d). According to the invention, the method comprises the following further steps: g) setting in the electronic control unit the mass M of plastic material processed by the press in a single molding cycle or in a predefined number of molding cycles as a function of the mold used by the press itself; h) detecting the duration T of the molding cycle in progress of the press by setting the electronic control unit in communication with the press; i) calculating the flow rate m of plastic material processed by the press during the molding step d) using at least the following values: - duration T of the molding cycle in progress detected in step h); - mass M of plastic material processed by the press in a single molding cycle or a predefined number of molding cycles, set in step g). The invention also relates to an injection molding system of plastic material in granular form and a dehumidification system.

FIG.1

## Description

Field of application

The object of the present invention is an injection molding method and system of plastic material in granular form.

The object of the present invention is also a dehumidification plant intended to be integrated into an injection molding system.

Background art

In general, in the processing of plastic materials, and in particular in the injection molding of plastic materials, the treatment of dehumidification of the granules of plastic material which is carried out before the melting thereof is of great importance, the latter operation being functional for their subsequent processing.

As is known, plastic materials in granular form, due to their hygroscopicity, contain water molecules. In the melting step, the water molecules can creep into the molecular chains of the polymers and break them. This causes surface defects, blows and structural and color inhomogeneity in the final artifacts, to the detriment of the quality of the final product. For this reason, the granular plastic materials are previously dehumidified before being fed to the transforming machines, such as injection molding presses.

The plastic materials in granules to be subjected to dehumidification are typically stored in hoppers fluidsealably connected to one or more hot and dry air generators, called in the jargon "dryer", which provide hot and dry air in the hopper. Once it has entered the hopper, the hot and dry air passes in full or in part through the mass of plastic granules to be dehumidified, removes the moisture contained therein and exits from the hopper through a suitable outlet conduit.

In order to ensure a finished product of good quality, it is necessary that the quantity of water present per unit of volume or mass unit of granular material is always kept at a minimum level without creating overdrying of the plastic granules, which would cause deterioration in the material resulting in the discard thereof, in addition to an expenditure of energy for drying.

As is known, the achievement of the desired dehumidification degree for a given granular plastic material, which will then be melted in a transforming machine, depends on many factors, in particular: the residence time of the granular material within the dehumidification hopper; the specific flow rate of process air fed to the hopper; the treatment temperature; and the thermo-fluid dynamic behavior linked to the interaction between the process air stream and the granular plastic material, depending on the geometry of the hopper.

The residence/stay time $\tau$ in the hopper is the ratio of the amount of material inside the hopper to the hourly output m imposed by the transforming machine.

The hourly output m of the transforming machine is the flow rate of granular material processed by the transforming machine.

The specific air flow rate k is the dry air flow rate necessary to dehumidify a unitary hourly output of a given plastic material in granular form. This value varies from plastic material to plastic material.

According to the degree of dehumidification required for a given material to be treated, the granules of material must stand inside the hopper for a predetermined and specific time interval, at a given process temperature, such as to allow the diffusion of the molecules of water from the inside to the outside of the granules.

As is known, the operating practice provides that the residence time $\tau$ of the granular material to be treated is fixed in advance on the basis of values tabulated in the literature, variable according to the type of material, assuming that the latter has a fixed humidity value.

On the basis of the presumed residence time $\tau$ and of the hourly output $\dot{m}$ of the material to be treated (imposed by the transforming machine to which the hopper must be interlocked) the hopper volume is calculated.

Hence it follows that the residence time $\tau$ cannot be considered a system variable, but rather a predetermined parameter.

In order to change the degree of residual moisture that the granular material has at the end of the dehumidification treatment, it is therefore necessary to intervene on the characteristics of the process air, modifying the specific air flow rate k and/or the treatment temperature and/or the process air dew point temperature.

It is noted that the dew point temperature is defined as the temperature at which, at constant pressure, the air or, more precisely, the steam-air mixture becomes saturated with water vapor. The dew point temperature is therefore associated with the relative humidity of the air flow and therefore with the dehumidifying capacity.

Traditionally, the dehumidification process is then managed on the basis of standard conditions presented in the literature for the different types of plastic material to be treated.

In the prior art of dehumidification plants, the operator is expected to provide to the control unit an estimated value of the hourly output m of the material to be treated required by the transforming machine.

The control unit calculates the air flow Q required by the hopper according to the following formula:

$$Q = \dot{m} \ k$$

where Q is the calculated air flow rate, m the hourly output required by the transforming machine and set in the control unit and k is the specific air flow rate, which depends on the type of material according to values available in the literature.

As is known to those skilled in the art, in real operating conditions, the flow rate of plastic material exiting from the dehumidification hopper (i.e. the hourly output m) is variable due to the inconstancy of the production condition of the transforming machine.

A typical example is given by the downtime of a transforming machine consisting of an injection molding press for mold replacement. In this situation, the hourly output remains set in the dehumidification plant control unit and the system continues to supply the air flow rate according to the proportionality relationship described above, with evident energy waste.

Variations on the real value of the hourly output derive from the characteristics of the processed plastic material. The rheological properties of the material to be treated can, in fact, vary from lot to lot during the manufacture of the articles. In this situation, the time of a molding cycle of an injection press (hereinafter, more simply "cycle time") may increase and the hourly output of the material to be treated consequently decrease. Also in this case, therefore, the hourly output set will be higher than the real one and consequently also the air flow will be proportionally, according to the relationship, higher with unnecessary energy expenditure for the dehumidification treatment.

Therefore, due to the variability of the conditions of the transforming machine, the dehumidification process may not be completely satisfactory.

In particular, it may happen that the treated plastic material has degrees of residual humidity higher than the maximum acceptable ones, as in the case where there is an increase in hourly output by the transforming machine with respect to the set value. In this case, the air flow rate will not be sufficient to dehumidify the granular material to be treated to the necessary degree, leading the transforming machine to produce products that are not qualitatively suitable for the specific requirements.

System solutions have been proposed which provide for regulating the air flow of the dehumidification plant based on the hourly output value measured in the hopper.

According to this solution, the hourly output is monitored by using load cells placed on the base of the hopper.

This system, while improving the management of the dehumidification process, is not yet satisfactory. The use of load cells allows measuring the hourly output of the treated material in real time, but it provides an inaccurate measure.

In these types of plants, vibrations may, in fact, negatively affect the weighing of the hopper, thus causing a high error in the calculation of the hourly output.

Moreover, during the loading of the hopper (which takes place through a feeder positioned above the hopper itself), the system will not be able to detect the hourly output. In this step it is not possible, in fact, to adequately filter the signal of the load cells because the variation of the hopper weight for the calculation of the output cannot be calculated during the introduction of the material to be treated inside the hopper.

A further limit related to the use of load cells is the cost of these devices, which is still very high.

In the field of plastic processing systems in granular form, and in particular of injection molding systems, the need to improve the regulation of the dehumidification air flow according to the actual operating conditions of the processing system is therefore very much felt, in order to increase the energy efficiency of the process.

Disclosure of the invention

Therefore, the object of the present invention is to eliminate or at least mitigate the drawbacks of the prior art described above, providing an injection molding method and system of plastic material in granular form, which allow a more effective regulation of the dehumidification air flow rate as the hourly output of the single molding press of the system varies, so as to increase the energy efficiency of the system.

Another object of the present invention is to provide an injection molding system and method of plastic material in granular form, which is simple and cost-effective to produce.

A further object of the present invention is to provide a dehumidification plant designed to be integrated into an injection molding system, which allows a more effective regulation of the dehumidification air flow rate as the hourly output of the single molding press varies, so as to increase the energy efficiency of the system, and which at the same time is simple and cost-effective to produce.

Brief description of the drawings

The technical features of the invention, according to the aforesaid aims, can clearly be seen in the content of the claims below, and its advantages will become more readily apparent in the detailed description that follows, made with reference to the accompanying drawings, which illustrate one or more purely exemplary and non-limiting embodiments thereof, in which:

- figure 1 shows a diagram of an injection molding system of plastic material in granular form according to a first embodiment of the invention; and
- figure 2 shows a diagram of an injection molding system of plastic material in granular form according to a second embodiment of the invention; and
- figure 3 shows a general time schedule of the operating molding cycle of an injection molding press of plastic materials in granular form.

Detailed description

The present invention relates to both a method and a system of injection molding of plastic material in granular form. The present invention also relates to a dehumidification plant intended to be integrated into an injection molding system.

Herein and in the following description and claims, the term "granular" is meant to generally include materials in any form, for example in the form of granules, powder or scales. Therefore, also included are flakes, small sheets or plates produced by the grinding-crushing of plastic material in sheet, foil, film and the like.

In the description and claims, reference will be made to an air flow as a process fluid for dehumidifying the granular material. It is understood that this expression is not meant to limit the use to air only, but it is meant to include the use of other treatment fluids suitable for this purpose.

By the term "hopper" it is meant any type of container, also called silo, variously configured in cross section, for example with a circular, square or rectangular section, and ending inferiorly with a tapered section provided with a special discharge mouth.

For simplicity of description, the injection molding method of plastic material in granular form according to the invention will initially be described. Subsequently, the molding system according to the invention as well as the dehumidification plant according to the invention will be described, referring to the common parts already described above.

According to a general embodiment of the present invention, the molding method comprises two initial operating steps:

a) arranging at least one injection molding press 200, provided with a feeding mouth 201 of the plastic material; and
b) arranging a dehumidification plant of the plastic material comprising:

- at least one hopper 10; 70, 80, 90, 100 for containing the granular material to be dehumidified intended to be fed to said at least one press 200; the hopper comprises an outlet mouth 12 connected to the feeding mouth 201 of the press 200 itself;
- at least one generator 20; 120, 130, 140, 150 of dry air fluidically connected to said at least one hopper 10; 70, 80, 90, 100 via means 30 for distributing a flow of dry air within the hopper; and
- an electronic control unit 300, designed to regulate the flow rate Q of the dry air flow through the hopper.

The press 200 treats a flow rate $\dot{m}$ of plastic material fed by the hopper 10; 70, 80, 90, 100, variable according to the duration of the molding cycle. The aforementioned flow rate m of plastic material fed by the hopper is known in the art as "hourly output".

In particular, the aforesaid at least one injection molding press 200 and the dehumidification plant of the plastic material are integrated together to form an injection molding system 1.

The molding method further comprises the following operating steps:

c) setting in the electronic control unit 300 the type of plastic material contained in said at least one hopper 10; 70, 80, 90, 100, thus defining the specific flow rate of air k of the material;
d) injection molding the plastic material by means of the press 200;
e) generating a dry air flow through said at least one hopper 10; 70, 80, 90, 100 through said at least one generator 20; 120, 130, 140, 150; and
f) regulating the flow rate Q of the dry air flow rate in proportion to the flow rate m of plastic material processed by said at least one press 200 during said molding step d).

In step f), the flow rate Q of dry air is regulated according to a flow rate Q calculated by the electronic control unit 300 as $Q = k\,\dot{m}$, i.e. as a product of the specific flow rate k of air of the plastic material processed and of the flow rate m of plastic material processed by the press 200.

Advantageously, step c) of setting in the electronic control unit 300 the type of plastic material contained in said at least one hopper 10; 70, 80, 90, 100 is repeated if the type of material contained in the hopper changes.

The specific air flow rate k for each material processed is defined on the basis of values available in the literature (which can be readily found by a man skilled in the art) or can be obtained from laboratory tests. Advantageously, the specific air flow rates K for each type of plastic material can be stored in the electronic control unit 300.

As will be explained hereafter, the present invention focuses on the method for detecting and calculating the flow rate m of plastic material processed by the press 200 (i.e., the hourly output).

According to a first essential aspect of the invention, the method comprises the operating step g) of setting in the electronic control unit 300 the mass M of plastic material processed by the press 200 in a single molding cycle or in a predefined number of molding cycles as a function of the mold used by the press itself.

This operating step g) is repeated if the mold used by the press 200 is changed. Otherwise, if there is no change of mold, step g) needs not be repeated.

Operationally, the aforesaid mass M of plastic material processed by the press 200 in a single molding cycle corresponds to the weight of the final article or articles produced by the press in a single molding cycle, i.e. by filling the mold in use. The press 200 may be provided with a single cavity or two or more cavities which can be filled during the same molding cycle.

In the electronic control unit 300 it is possible to directly set the value of the treated mass M in a single molding cycle, or alternatively it is possible to set a multiple of this single value, simultaneously entering the number of cycles to which this value refers.

According to a further essential aspect of the invention, the method comprises the following two further operating steps:

- h) detecting the duration T of the molding cycle in progress of said at least one press 200 setting the electronic control unit 300 in communication with said at least one press 200; and
- i) calculating the flow rate m of plastic material processed by said press 200 during said molding step d) using at least the following values: - duration T of the molding cycle in progress detected in step h); and - mass M of plastic material processed by the press 200 in a single molding cycle or a predefined number of molding cycles, set in step g).

Operationally, the flow rate m of plastic material processed by said press 200 during said molding step d) (i.e. the hourly output) is calculated in real time at each molding cycle as the ratio of the mass M to the duration T of the running cycle.

As already noted in the above regulation step f), the flow rate Q of the dry air flow rate is regulated in proportion to the flow rate m of plastic material processed by said at least one press 200 during said molding step d) (that is, in proportion to the hourly output). The proportionality factor consists of the specific air flow rate K of the material processed.

Contrary to what is contemplated in the prior art, the hourly output value m is neither set as a constant (predefined) parameter nor estimated on the basis of measurements of the flow exiting the hopper. On the contrary, according to the invention the hourly output value m is calculated (or estimated) by detecting the (variable) duration of the molding cycle of the injection molding press, assuming that the quantity of material processed in a single cycle remain constant if the mold does not change).

Due to the method according to the present invention it is possible to regulate the dehumidification air flow rate Q as the hourly output m of the press changes in a simple and at the same time effective manner, without the need to provide the dehumidification plant with of sophisticated, yet inaccurate detection devices (load cells) of the material flow rate exiting the hopper.

The method according to the invention in fact exploits information on the molding cycle which can be obtained directly from the injection molding press.

It is therefore possible to detect in real time variations in the hourly output m of a specific press, adapting the dry air flow rate to the actual dehumidification requirements, so as to increase the energy efficiency of the press and of the dehumidification plant.

According to an embodiment of the method according to the invention, the flow rate Q of the dry air flow rate can be continuously adjusted according to the instantaneous output value m, recalculated at each molding cycle.

According to a preferred embodiment of the method according to the invention, the flow rate Q of the dry air flow rate can instead be adjusted on the basis of an average value of the hourly output m, calculated on a predefined number of cycles preceding the one in progress at the time of calculation. The average hourly output value is calculated by a moving average, i.e. by considering a predefined number of molding cycles preceding that observed at the time of calculation.

Operatively, in the calculation of the air flow rate Q and in the consequent regulation, the use of an average value of the hourly output m, rather than an instantaneous value, makes the control system more robust, reducing the risk of instability.

More in detail, if by hypothesis the variation of the calculated air flow rate Q was faster than the movement of the actuators in charge of regulation (in particular, the partialization valves described below), the system would require to pursue the required value without ever reaching it, thus creating potential instability in the regulation system.

Otherwise, with the use of a mean hourly output value, the actuators responsible for regulation (partialization valves) will adjust the required air flow rate Q without any risk of instability.

Furthermore, using the average hourly output value, the statistical error decreases since the standard deviation decreases as the number of molding cycles used to calculate the average increases.

Preferably, therefore, in the calculation step i) of the flow rate m of plastic material processed by said press 200, as a duration value of the molding cycle the duration value of the molding cycle detected in step h) is used, averaged on the duration values of a predefined number of cycles preceding that observed at the time of calculation.

Advantageously, to this end, the method according to the invention comprises a step 1) of storing in the electronic control unit 300 the duration values of the molding cycles carried out by the press over time.

In particular, said at least one hopper 10; 70, 80, 90, 100 is sized so as to impose on the plastic material passing therein a predefined average residence time $\tau$ if the flow rate m of plastic material processed by the press 200 is equal to a predefined flow rate value of said plastic material. This predefined flow rate value of said plastic material is the hourly output sizing value.

Preferably, the duration value T of the molding cycle detected in step h) is averaged over a number of cycles preceding that observed, carried out over a period equal to a submultiple of the average residence time $\tau$ of the plastic material in said at least one hopper 10; 70, 80, 90, 100.

Operatively, limiting the calculation of the average value of the duration T of the molding cycle over a (moving) period of time equal to a submultiple of the average residence time $\tau$ of the material in the hopper is advantageous since, in order to change in a timely manner the variation of the residual humidity degree of the material processed inside the hopper, it is necessary to act in a shorter time than the time in which the material resides inside the hopper, i.e. the average residence time $\tau$. Otherwise, there is a risk that all the material inside the hopper produces articles that are not suitable for the required specifications.

According to a preferred embodiment of the present invention, said at least one press 200 is provided with at least an electrical output channel 202, suitable to generate a signal correlatable to the duration of the molding cycle in progress. Operationally, in said detection step h), the electronic control unit 300 is set in communication with the press 200 via said electrical output channel 202. In this way, it is possible to detect variations in the hourly output in real time based on variations in the duration of the molding cycles, assuming the constancy of the mass M of plastic material processed in a single molding cycle.

In general, a plastic injection molding press 200 comprises a plastification screw, mounted on a supporting frame and controlled by conventional control means.

The plastification screw is fed with the dehumidified granular plastic material, coming from the outlet mouth 12 of the dehumidification plant hopper, in the proximity of a first end thereof, where a feed chamber is provided. At the opposite end, the plastification screw is connected to a mold in which the molten plastic material is injected. The mold is a matrix consisting of one or more cavities, based on the number of pieces that can be molded at each molding cycle.

The press is provided with means for opening and closing the mold. In particular, these means may consist of a piston member connected to the mold on the opposite side with respect to the plastification screw and is slidably mounted on the frame to provide for opening and closing the mold.

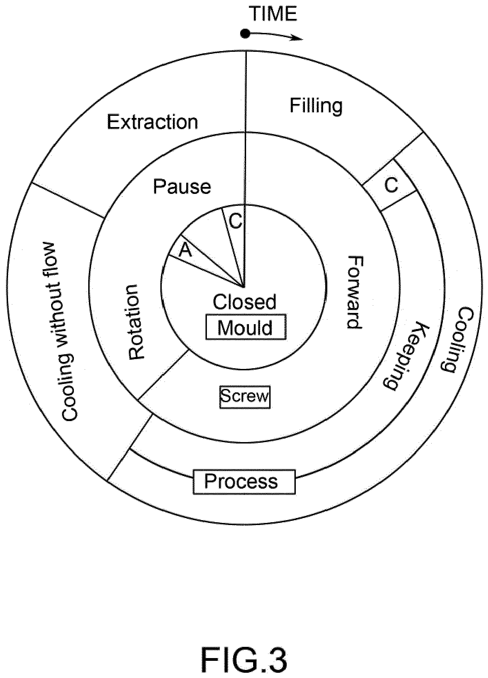

In general, the molding cycle in an injection molding press may comprise a plurality of operating steps which are described below with reference to the diagram in the accompanying figure 3.

Figure 3 schematically illustrates the arrangement of the injection assembly and of the mold closing assembly of an injection molding press, in a circular temporal sequence.

More in detail, the diagram in figure 3 is structured on three concentric circular rings.

The outer ring of the diagram in figure 3 describes in sequence the operating steps of the molding process:

- Filling the mold, defined as total filling of the molten granular material in the cavities;
- Cooling, carried out through the circulation of refrigerant fluid which removes heat from the material injected into the mold to speed up the solidification time.
- Keeping under pressure to introduce other material into the mold to compensate for any thermal shrinkage due to cooling.
- Cooling without flow: takes place after the solidification step; at this stage, there is no flow of material.
- Extraction: when the piece reaches a temperature sufficient to obtain a structural rigidity that prevents deformation.

The intermediate ring of the diagram in Figure 3 describes the movement steps of the plastification screw:

- Screw Forward: this movement allows the flow progress along the injection direction without reflux problems.
- Rotation: the physical process corresponds to the cooling without outflow, which due to the solidification of the gate blocks the flow of material in the mold and allows the screw to start a new plastification for the next injection.
- Pause: when the screw has completed the plastification of the polymer, it remains stopped until the production cycle is complete.

Finally, the inner ring of the diagram in Figure 3 depicts the movement of the mold closing unit, which in particular is operated by means of pistons:

- for almost the entire duration of the molding cycle the mold remains closed, in particular from the filling step up to the total cooling of the article, that is, when it reaches a temperature such as to not deform due to the action of the extractors;
- Open mold: when the molded piece completes the cooling, the mold opens to allow the extraction of the latter, in particular due to particular extractors installed in the mold or by means of auxiliary machinery.
- Closed mold: once the extraction has been carried out, the mold is closed to allow the injection of the next production cycle.
- The sectors named A and C correspond to the steps for the opening and closing time of the mold.

In general, the duration of a molding cycle corresponds to the sum of the times of the single steps described above.

Preferably, within the scope of the present invention, the duration T of a molding cycle corresponds to the time interval between two consecutive closings or openings of the mold of the injection molding press 200.

According to a particularly preferred embodiment of the present invention, said at least one electrical output channel consists of a clean contact 202, suitable to generate a binary electrical signal correlatable to the opening state and to the closing state of the mold when the clean contact is subjected to electric voltage.

Operationally, in said detection step h), the electronic control unit 300 is set in communication with the press 200 by applying an electric voltage from the electronic control unit 300 to the clean contact, so as to generate said binary signal.

Advantageously, said clean contact 202 may consist of an auxiliary contact of a relay. In particular, said auxiliary contact is a movable contact of the relay that closes or opens depending on the opening or closing state of the mold.

In particular, said binary signal is a square wave having a period corresponding to the time interval between two consecutive closings or openings of the mold and therefore to the duration (T) of the molding cycle.

Operationally, said electronic control unit 300 analyzes this binary signal by assigning the value of the square wave period to the duration T of the molding cycle in progress.

The detection of information on the duration of the single molding cycle by means of clean contacts is particularly advantageous since it does not require any specific information integration between the press and the electronic control unit of the dehumidification plant. Due to this, the dehumidification plant can be connected to any press without the need for particular information devices. This would not be possible if modbus type electronic channels were used, as it would be necessary to know the relative communication protocols.

Otherwise, the binary signal generated by the clean contact can be analyzed extremely easily and robustly by the electronic control unit through simple data processing programs.

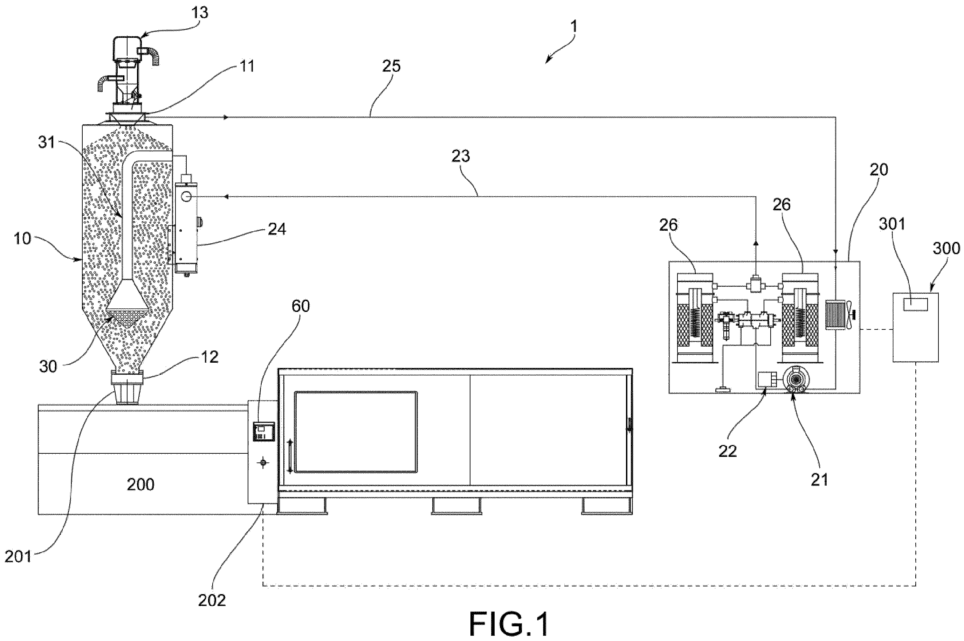

According to the embodiment illustrated in Figure 1, the dehumidification plant provided in step b) of the method according to the invention comprises:

- at least one hopper 10 for containing granular material to be dehumidified having a feeding mouth 11 and an outlet mouth 12;
- at least one generator 20 of dry air fluidically connected to the means 30 for distributing the dry air inside the hopper 10.

The dehumidification plant further comprises at least one feeding or receiver device 13 through which the granular material is loaded into the hopper 10 up to a predetermined level.

The feeding device 13 is one of the terminals of a pneumatic conveying system (for example in depression) of the granular material, connected to one or more storage silos of the material.

The dry air generator 20 may be of any type. Preferably, the dry air generator 20 is of the type comprising adsorbing means, for example molecular sieves. The generator may be of the single tower type or of the type with two or more towers 26 with adsorbing means that alternate during the process and regeneration steps, or of the wheel type with honeycomb structure.

The generator is provided with ventilation means 21 (e.g. a blower) capable of generating an air flow through the adsorbing means to be sent inside the hopper after being dehumidified.

The ventilation (pressurization or air pumping) means consist, for example, of one or more blowers 21, provided with rotation speed variation means 22 of any suitable type, preferably of an electronic type, for example an inverter of any suitable type, which is designed to vary the feeding frequency to the motor of the blower 21, so as to be capable of modulating the flow rate of the dry air flow generated.

The generator 20 is fluidically connected to the hopper 10 by a delivery conduit 23 which flows into a diffuser insert 30 (which constitutes said air distribution means) located inside the hopper 10.

More in detail, this diffuser insert 30 may consist of a pipe 31 which is connected at one end to the delivery conduit 23 and which carries at the end a diffuser cone 23 arranged in the lower region of the hopper itself. The diffuser is provided with a plurality of holes, through which the dry and hot air is fed into the hopper and diffused in a variety of directions so as to impinge and thus dehumidify all the granular material stored inside the hopper. The air flow is in countercurrent with respect to the flow of granular material coming out of the hopper, to ensure the highest degree of dehumidification possible to the material intended for processing.

Preferably, a heating assembly 24 is arranged along the delivery conduit 23, designed to bring the flow of air to the intended processing temperature.

Once the air flow has passed through the granular plastic material (from bottom to top) and has reached the top of the hopper 10, the exhaust air (that is, loaded with moisture absorbed from the material) enters a return conduit 25, and then is returned again to the dry air generator 20.

According to the embodiment of the dehumidification plant illustrated in figure 1, the dry air generator 20 may be arranged in the proximity of the hopper 10, which in turn is placed in turn on the injection molding press 200.

In general, as already said, the plastic injection molding press 200 comprises a plastification screw mounted on a supporting frame and controlled by conventional control means.

The plastification screw is fed with the dehumidified granular plastic material, coming from the outlet mouth 12 of the dehumidification plant hopper, in the proximity of a first end thereof, where a feed chamber is provided. At the opposite end, the plastification screw is connected to a mold in which the molten plastic material is injected. The mold is a matrix consisting of one or more cavities, depending on the number of pieces that can be molded at each molding cycle.

The press is provided with means for opening and closing the mold. In particular, these means may consist of a piston member connected to the mold on the opposite side with respect to the plastification screw and is slidably mounted on the frame to provide for opening and closing the mold.

Preferably, the press 200 comprises a containment cabin closed around the mold.

According to the invention, the press 200 comprises at least one electrical output channel 202, which is preferably located in a control unit 60 of the press, for real-time monitoring of the injection molding process.

In particular, this electrical output channel 202 is a clean contact, so defined in electronic jargon, as a contact free of potential difference.

In other words, it is a contact that exchanges a binary signal simply by opening or closing said contact.

This clean contact 202 is associated with the operating state of the press 200, in particular when the mold is opened and closed and is electrically connected to the electronic control unit 300 of the dehumidification plant.

The clean contact is simpler to use for the connection with auxiliary systems than other types of signals operating with communication protocols, such as modbus.

Operationally, via the user interface 301 it is possible to store in the electronic control unit 300 the mass M of plastic material processed by the press 200 in a single molding cycle or in a predefined number of molding cycles as a function of the mold used by the press itself. Operationally, it is possible to store in particular the weight of a single article and the number of cavities of the mold, each of which defines a single article.

Operationally, according to what is contemplated by the method according to the invention, the electronic control unit 300 calculates the hourly output of the press 200 based on the signal derived from the state of the press itself and on the aforementioned data, as described above.

Having calculated the hourly output m, the electronic control unit 300 adjusts the operation of the hot and dehumidified air generator 20 to change the value of the air flow rate Q sent to the hopper and/or the temperature of said dry air and/or the moisture content of said dry air, preferably according to an energy saving logic.

In particular, the air flow rate is changed by acting on the ventilation means 21 by means of speed variation means 22, such as for example an inverter of any suitable type, following the aforementioned formula: $Q = \dot{m} \cdot k$.

The moisture content of the dry air flow (measured with a dew point temperature sensor, Tdew) may be adjusted by suitably varying the air flow that passes through the adsorbing means, for example by making part of the air flow bypass the molecular sieve dehumidification towers. The air flow temperature may be adjusted by acting on the heating unit.

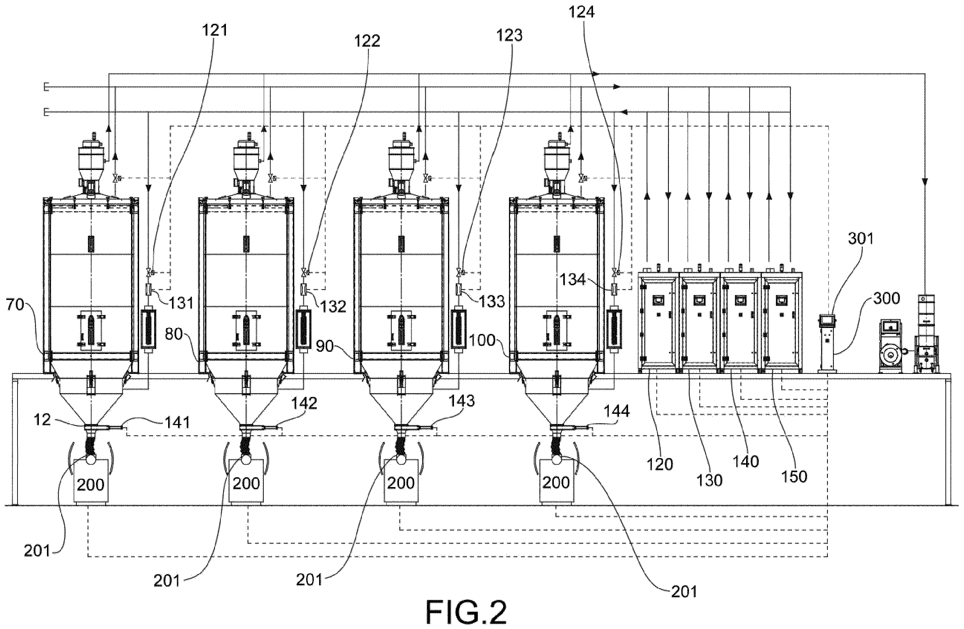

According to an alternative embodiment schematically illustrated in figure 2, the dehumidification plant 1 may be arranged with the dry air generators concentrated in a dedicated area of the plant.

In particular, the dehumidification plant may comprise a plurality of hoppers 70, 80, 90, 100, each of which can be controlled by an injection molding press 200.

Advantageously, the dehumidification plant 1 shown in figure 2 is provided with a system for adjusting the air flow rates in the hoppers, which will be described below by illustrating a preferred operating embodiment.

Operationally, the dehumidification plant is initially configured by an operator which, via the user interface 301, stores in the electronic control unit 300, for every single hopper, the features of the granular material to be dehumidified and/or the volume of the hopper itself and/or the estimated hourly output.

According to the method according to the invention, the operator also stores the data relating to each press associated with the hoppers, in particular the weight of the article and the number of cavities.

Subsequently, the electronic control unit 300 calculates, by means of a specific algorithm, the specific process air flow rate for each individual hopper, such as to adequately dehumidify the material stored inside, for the static bed phase, which is noted to correspond to the step in which the material inside the hopper is dehumidified, not transporting said material to the press.

Once the values of the flow rate required by each individual hopper have been calculated, the electronic control unit 300, by applying an energy efficiency logic, identifies which dry air generators can be activated according to the respective operating intervals, evaluating, in particular, the maximum suppliable air flow rate (linked to the features of the ventilation means) and the adsorption capacity for each tower.

On the basis of the sum of the air flows required by the hoppers, the electronic control unit sends a signal to the generators 120, 130, 140, 150 and to partialization valves 121, 122, 123, 124 arranged on the air port of the hoppers in such a way as to deliver the correct air flow rate estimated for the dehumidification of the material contained in each hopper 70, 80, 90, 100.

The correct flow rate in each air hopper is measured by means of an air flow meter 131, 132, 133, 134 of any suitable type.

Preferably, the air flow meter is a venturimeter nozzle, which has the advantage of combining the compactness features of a nozzle with reduced load losses of a venturimeter.

Once the static bed phase has been completed, the dynamic bed phase begins, i.e. the dehumidification step in which the plastic material is dehumidified while it flows through the hopper. The passage to the dynamic bed phase takes place by opening a gate 141, 142, 143, 144, arranged at the outlet mouth of each hopper for transporting the treated material to the corresponding press 200.

According to the method according to the invention, during the dynamic bed phase the electronic control unit 300 calculates the hourly output of each transforming machine.

In particular, the electronic control unit 300 calculates the duration T of the molding cycle of each press 200, by means of the signals coming from the clean contacts of each press and on the basis of the data previously stored by the operator, i.e. the weight of the article and the mold cavity number.

Thereafter, the electronic control unit 300 sends a signal to the dry air generators and to the partialization valves, so as to optimize the air flow rate in each hopper as a function of the energy actually required for dehumidification.

Advantageously, as already described above, the hourly output $\dot{m}$ may be calculated not instantaneously, but on an average cycle time, for example on a time average of $\tau/4$, where $\tau$ is the residence time of the material processed.

The injection molding system 1 of plastic material in granular form according to the invention will now be described.

According to a general embodiment of the present invention, the molding system 1 comprises:

- at least one injection molding press 200, provided with a feeding mouth 201 of the plastic material; and
- a dehumidification plant for the plastic material fed to said at least one hopper.

In particular, said at least one injection molding press 200 of said system 1 according to the invention corresponds to the press which is provided in step a) of the method described above. For simplicity of description, reference shall be made to the description of such a press already made above, which will therefore not be repeated again.

It will only be noted that according to the invention, said at least one press 200 of system 1. is provided with at least an electrical output channel 202, suitable to generate a signal correlatable to the duration of the molding cycle in progress.

In particular, the dehumidification plant of the molding system 1 according to the invention corresponds to the dehumidification plant which is provided in step b) of the method described above. For simplicity of description, reference shall be made to the description already made above, which will therefore not be repeated again.

It will only be noted that, according to the invention, the dehumidification plant of system 1 comprises at least one electronic control unit 300 which is designed to regulate the flow rate Q of dry air through the hopper 10; 70, 80, 90, 100 and is provided with at least one user interface 301 for entering operating parameters. Moreover, such an electronic control unit is configured for:

- receiving in input through the user interface 301 the mass M of plastic material processed by the press 200 in a single molding cycle or in a predefined number of molding cycles as a function of the mold used by the press itself;
- analyzing the signal generated by the electrical channel 202 for detecting the duration T of the molding cycle in progress of the press 200; and
- calculating the flow rate Q of plastic material processed by the press 200 (i.e. the hourly output) using at least the following values: - duration T of the molding cycle; and - mass M of plastic material processed by the press 200 in a single molding cycle or a predefined number of molding cycles.

As already described above, preferably the electrical output channel of the press consists of a clean contact 202, suitable to generate a binary electrical signal correlatable to the opening state and to the closing state of the mold when the clean contact is subjected to electric voltage. Advantageously, the electronic control unit 300 is set in communication with the press 200 by applying an electric voltage from the electronic control unit 300 to the clean contact, so as to generate said binary signal.

In particular, said binary signal is a square wave having a period corresponding to the time interval between two consecutive closings or openings of the mold and therefore to the duration T of the molding cycle. Advantageously, the electronic control unit 300 is configured for analyzing this binary signal by assigning the value of the square wave period to the duration T of the molding cycle in progress.

Advantageously, the electronic control unit 300 is configured for storing in at least one memory unit the duration values of the molding cycles carried out by the press over time. Preferably, the electronic control unit 300 is configured for calculating the flow rate $\dot{m}$ of plastic material processed by the press 200 using as a duration value of the molding cycle the duration value of the molding cycle detected thereby, averaged on the duration values of a predefined number of cycles preceding that observed at the time of calculation.

Preferably, the electronic control unit 300 is configured for calculating the value T of the duration of the molding cycle detected, averaged over a number of cycles preceding that observed, carried out over a period equal to a submultiple of the average residence time $\tau$ of the plastic material in the hopper.

The dehumidification plant of plastic material in granular form according to the present invention will now be described.

The dehumidification plant according to the present invention is intended to feed dehumidified plastic material to at least one injection molding press 200, provided with a feeding mouth 201 of the plastic material.

In particular, the dehumidification plant according to the invention corresponds to the dehumidification plant which is provided in step b) of the method described above and which is provided with the injection molding system 1, also described above.

For simplicity of description, reference shall be made to the description already made above, which will therefore not be repeated again.

It will only be noted that, according to the invention, the dehumidification plant comprises at least one electronic control unit 300 which is provided with at least one user interface 301 for entering operating parameters and is configured for:

- being set in communication with said at least one press 200 through said at least one electrical output channel 202 of the press, suitable to generate a signal correlated to the duration T of the molding cycle in progress;
- receiving in input through the user interface 301 the mass M of plastic material processed by the press 200 in a single molding cycle or in a predefined number of molding cycles as a function of the mold used by the press itself;
- analyzing the signal generated by said electrical channel 202 for detecting the duration T of the molding cycle in progress of the press 200; and
- calculating the flow rate $\dot{m}$ of plastic material processed by the press 200 using at least the following values:
- duration T of the molding cycle; and - mass M of plastic material processed by the press (200) in a single molding cycle or a predefined number of molding cycles.

The injection molding press 200 which can be fed by the dehumidification plant 1 according to the invention corresponds to the press which is provided in step b) of the method described above and which is provided with the injection molding system 1, also described above. For simplicity of description, reference shall be made to the description of such a press already made above, which will therefore not be repeated again.

It is only noted that, preferably, said electrical output channel 202 of said press consists of a clean contact, suitable to generate a binary electrical signal correlatable to the opening state and to the closing state of the mold when the clean contact is subjected to electric voltage.

Advantageously, the electronic control unit 300 of the dehumidification plant is configured for being set in communication with the press 200 by applying an electric voltage from the electronic control unit 300 to the clean contact, so as to generate said binary signal.

Said binary signal is a square wave having a period corresponding to the time interval between two consecutive closings of the mold and therefore to the duration T of the molding cycle. Advantageously, the electronic control unit 300 is configured for analyzing this binary signal by assigning the value of the square wave period to the duration T of the molding cycle in progress.

Preferably, the electronic control unit 300 is configured for storing in at least one memory unit the duration values of the molding cycles carried out by the press over time. The electronic control unit 300 is configured for calculating the flow rate $\dot{m}$ of plastic material processed by the press 200 using as a duration value of the molding cycle the duration value of the molding cycle detected thereby, averaged on the duration values of a predefined number of cycles preceding that observed at the time of calculation.

Advantageously, said electronic control unit 300 is configured for calculating the value T of the duration of the molding cycle detected averaged over a number of cycles preceding that observed carried out over a period equal to a submultiple of the average residence time $\tau$ of the plastic material in the hopper.

The invention allows several advantages to be achieved, some of them already described.

The injection molding method and system of plastic material in granular form according to the invention allow a more effective regulation of the dehumidification air flow rate as the hourly output of the single molding press of the system varies, so as to increase the energy efficiency of the system.

The regulation is more effective and robust than the prior art solutions since it is based on assumptions about the constancy of the material processed by a press in a single molding cycle and focuses on the detection of the duration of the single molding cycle or possibly on an average value thereof.

The injection molding method and system of plastic material in granular form are therefore simple and cost-effective to implement, above all if the detection of information about the duration of the molding cycle is carried out by using electrical output channels of the press consisting of clean contacts.

For the same reasons, also the dehumidification plant according to the invention allows a more effective regulation of the dehumidification air flow rate as the hourly output of the system varies, increasing the energy efficiency thereof and at the same time is of simple and cost-effective implementation.

The invention thus conceived thus achieves the intended purposes.

Of course, it may take, in its practical embodiment, also shapes and configurations other than the above, without departing from the present scope of protection.

Furthermore, all details may be replaced with technically equivalent elements and the dimensions, shapes and materials used may be any according to the needs.

**Claims**

1. Injection molding method of plastic material in granular form, comprising the following operational steps:

a) arranging at least one injection molding press (200), provided with a feeding mouth (201) of the plastic material;

b) arranging a dehumidification system of said plastic material comprising:

- at least one hopper (10; 70, 80, 90, 100) for containing the granular material to be dehumidified intended to be fed to said at least one press (200), wherein said hopper (10; 70, 80, 90, 100) comprises an outlet mouth (12) connected to the feeding mouth (201) of the press (200);
- at least one generator (20; 120, 130, 140, 150) of dry air fluidically connected to said at least one hopper (10; 70, 80, 90, 100) via means (30) for distributing a flow of dry air within said hopper (10; 70, 80, 90, 100); and
- an electronic control unit (300), designed to regulate the flow rate (Q) of the dry air flow through said hopper (10; 70, 80, 90, 100);

c) setting in the electronic control unit (300) the type of plastic material contained in said at least one hopper (10; 70, 80, 90, 100), defining the specific flow rate of air (k) of said material;

d) injection molding said plastic material by means of said at least one press (200), wherein said press (200) processes a flow rate of plastic material (m) fed by said hopper (10; 70, 80, 90, 100), which is variable depending on the duration of the molding cycle;

e) generating a dry air flow through said at least one hopper (10; 70, 80, 90, 100) through said at least one generator (20; 120, 130, 140, 150);

f) regulating the flow rate (Q) of the dry air flow rate in proportion to the flow rate ($\dot{m}$) of plastic material processed by said at least one press (200) during said molding step d), wherein said flow rate (Q) of dry air is calculated by the electronic control unit (300) as the product of the specific flow rate (k) of air of the plastic material processed and of the flow rate ($\dot{m}$) of plastic material processed by the press (200);

**characterized in that** it comprises the following further steps:

g) setting in the electronic control unit (300) the mass (M) of plastic material processed by the press (200) in a single molding cycle or in a predefined number of molding cycles as a function of the mold used by the press itself;

h) detecting the duration (T) of the molding cycle in progress of said at least one press (200) setting said electronic control unit (300) in communication with said press (200);

i) calculating the flow rate ($\dot{m}$) of plastic material processed by said press (200) during said molding step d) using at least the following values:

- duration (T) of the molding cycle in progress detected in step h);
- mass (M) of plastic material processed by the press (200) in a single molding cycle or a predefined number of molding cycles, set in step g).

2. Method according to claim 1, wherein said at least one press (200) is provided with at least one electrical output channel (202), suitable to generate a signal correlatable to the duration of the molding cycle in progress, wherein in said detection step h) the electronic control unit (300) is set in communication with said press (200) via said electrical output channel (202).

3. Method according to claim 2, wherein the duration (T) of a molding cycle corresponds to the time interval between two consecutive openings or closings of the mold of said injection molding press (200) and wherein said at least one electrical output channel consists of a clean contact (202), suitable to generate a binary electrical signal correlatable to the opening state and to the closing state of the mold when said clean contact is subjected to electric voltage, wherein in said detection step h) the electronic control unit (300) is set in communication with said press (200) by applying an electric voltage from said electronic control unit (300) to said clean contact (202) so as to generate said binary signal.

4. Method according to claim 3, wherein said clean contact (202) consists of an auxiliary contact of a relay.

5. Method according to claim 4, wherein said auxiliary contact is a movable contact of the relay that closes or opens depending on the opening or closing state of the mold.

6. Method according to claim 3, 4 or 5, wherein said binary signal is a square wave having a period corresponding to the time interval between two consecutive openings or closings of the mold, and then to the duration (T) of the molding cycle, wherein said electronic control unit (300) analyzes said binary signal by attributing the value of the period of said square wave to the duration (T) of the molding cycle in progress.

7. Method according to one or more of the preceding claims, comprising a step 1) of storing in the electronic control unit (300) the duration values of the molding cycles carried out by the press over time and wherein, in said calculation step i) of the flow rate ($\dot{m}$) of plastic material processed by said press (200), as a duration value of the molding cycle using the duration value of the molding cycle detected in step h), averaged on the duration values of a predefined number of cycles preceding that observed at the time of calculation.

8. Method according to claim 7, wherein said at least one hopper (10; 70, 80, 90, 100) is sized so as to impose on the plastic material passing therein a predefined average residence time ($\tau$) if the flow rate ($\dot{m}$) of plastic material processed by said press (200) is equal to a predefined flow rate value of said plastic material, and wherein the duration value (T) of the molding cycle detected in step h) is averaged over a number of cycles preceding that observed carried out over a period equal to a submultiple of the average residence time ($\tau$).

9. Method according to one or more of the preceding claims, wherein said step g) of setting in the electronic control unit (300) the mass (M) of plastic material processed by the press (200) is repeated if the mold used by the press itself is changed.

10. Injection molding system of plastic material in granular form, comprising:

- at least one injection molding press (200), provided with a feeding mouth (201) of the plastic material; and
- a dehumidification system of said plastic material in turn comprising:
- at least one hopper (10; 70, 80, 90, 100) for containing the granular material to be dehumidified intended to be fed to the press (200), wherein said hopper comprises an outlet mouth (12) connected to the feeding mouth (201) of the press (200) itself;
- at least one generator (20; 120, 130, 140, 150) of dry air fluidically connected to said at least one hopper (10; 70, 80, 90, 100) via means (30) for distributing a flow of dry air within said hopper (10; 70, 80, 90, 100); and
- an electronic control unit (300), which is designed to regulate the flow rate (Q) of dry air through the hopper (10; 70, 80, 90, 100) and is provided with at least one user interface (301) for entering operating parameters,
**characterized in that** said at least one press (200) is provided with at least an electrical output channel (202), suitable to generate a signal correlatable to the duration of the molding cycle in progress,
**and wherein** said electronic control unit (300) is set in communication with said at least one press (200) via said at least one electrical output channel (202) and is configured for:
- receiving in input through said user interface (301) the mass (M) of plastic material processed by the press (200) in a single molding cycle or in a predefined number of molding cycles as a function of the mold used by the press itself;
- analyzing the signal generated by said electrical channel (202) for detecting the duration (T) of the molding cycle in progress of said press (200); and
- calculating the flow rate (Q) of plastic material processed by said press (200) using at least the following values:
- duration (T) of the molding cycle detected; and
- mass (M) of plastic material processed by the press (200) in a single molding cycle or in a predefined number of molding cycles.

11. Molding system according to claim 10, wherein said at least one electrical output channel consists of a clean contact (202), suitable to generate a binary electrical signal correlatable to the opening state and to the closing state of the mold when said clean contact is subjected to electric voltage, wherein said electronic control unit (300) is set in communication with said press (200) by applying an electric voltage from said electronic control unit (300) to said clean contact (202) so as to generate said binary signal.

12. Molding system according to claim 11, wherein said clean contact (202) consists of an auxiliary contact of a relay.

13. Molding system according to claim 12, wherein said auxiliary contact is a movable contact of the relay that closes or opens depending on the opening or closing state of the mold.

14. Molding system according to claim 11, 12 or 13, wherein said binary signal is a square wave having a period corresponding to the time interval between two consecutive closings of the mold, and then to the duration (T) of the molding cycle and wherein said electronic control unit (300) is configured for analyzing said binary signal by attributing the value of the period of said square wave to the duration (T) of the molding cycle in progress.

15. Molding system according to one or more of the preceding claims, wherein said electronic control unit (300) is configured for storing in at least one storage unit the duration values of the molding cycles carried out by the press over time and wherein said electronic control unit (300) is configured for calculating the flow rate ($\dot{m}$) of plastic material processed by said press (200) using as a duration value of the molding cycle the duration value of the molding cycle detected thereby, averaged on the duration values of a predefined number of cycles preceding that observed at the time of calculation.

**16.** Molding system according to claim 15, wherein said at least one hopper (10; 70, 80, 90, 100) is sized so as to impose on the plastic material passing therein a predefined average residence time ($\tau$) if the flow rate ($\dot{m}$) of plastic material processed by said press (200) is equal to a predefined flow rate value of said plastic material, and wherein said electronic control unit (300) is configured for calculating the duration value (T) of the molding cycle detected averaged over a number of cycles preceding that observed carried out over a period equal to a submultiple of the average residence time ($\tau$).

**17.** Dehumidification plant of plastic material in granular form, intended to feed said dehumidified plastic material to at least one injection molding press (200), provided with a feeding mouth (201) of the plastic material, wherein said dehumidification system comprises:

    - at least one hopper (10; 70, 80, 90, 100) for containing the granular material to be dehumidified intended to be fed to the at least one press (200), wherein said hopper (10; 70, 80, 90, 100) comprises an outlet mouth (12) connected to the feeding mouth (201) of the press (200);
    - at least one generator (20; 120, 130, 140, 150) of dry air fluidically connected to said at least one hopper (10; 70, 80, 90, 100) via means (30) for distributing a flow of dry air within said hopper (10; 70, 80, 90, 100); and
    - an electronic control unit (300), which is designed to regulate the flow rate (Q) of dry air through the hopper (10; 70, 80, 90, 100) and is provided with at least one user interface (301) for entering operating parameters, **characterized in that** said at least one press (200) is provided with at least an electrical output channel (202),

said electronic control unit (300) is configured for:

    - being set in communication with said at least one press (200) through said at least one electrical output channel (202) of said press, suitable to generate a signal correlatable to the duration (T) of the molding cycle in progress,
    - receiving in input through said user interface (301) the mass (M) of plastic material processed by the press (200) in a single molding cycle or in a predefined number of molding cycles as a function of the mold used by the press itself;
    - analyzing the signal generated by said electrical channel (202) for detecting the duration (T) of the molding cycle in progress of said press (200); and
    - calculating the flow rate ($\dot{m}$) of plastic material processed by said press (200) using at least the following values:

        - duration (T) of the molding cycle detected; and
        - mass (M) of plastic material processed by the press (200) in a single molding cycle or in a predefined number of molding cycles.

**18.** Dehumidification plant according to claim 17, wherein said at least one electrical output channel (202) of said press consists of a clean contact suitable to generate a binary electrical signal correlatable to the opening state and to the closing state of the mold when said clean contact is subjected to electric voltage and wherein said electronic control unit (300) is configured for being set in communication with said press (200) by applying an electric voltage from said electronic control unit (300) to said clean contact (202) so as to generate said binary signal.

**19.** Dehumidification plant according to claim 18, wherein said clean contact (202) consists of an auxiliary contact of a relay.

**20.** Dehumidification plant according to claim 19, wherein said auxiliary contact is a movable contact of the relay that closes or opens depending on the opening or closing state of the mold.

**21.** Dehumidification plant according to claim 18, 19 or 20, wherein said binary signal is a square wave having a period corresponding to the time interval between two consecutive closings of the mold, and then to the duration (T) of the molding cycle and wherein said electronic control unit (300) is configured for analyzing said binary signal by attributing the value of the period of said square wave to the duration (T) of the molding cycle in progress.

**22.** Dehumidification plant according to one or more of claims 18 to 21, wherein said electronic control unit (300) is configured for storing in at least one storage unit the duration values of the molding cycles carried out by the press over time and wherein said electronic control unit (300) is configured for calculating the flow rate ($\dot{m}$) of plastic material processed by said press (200) using as a duration value of the molding cycle the duration value of the molding cycle detected thereby, averaged on the duration values of a predefined number of cycles preceding that observed at the time of calculation.

**23.** Dehumidification plant according to claim 22, wherein said at least one hopper (10; 70, 80, 90, 100) is sized so as to impose on the plastic material passing therein a predefined average residence time ($\tau$) if the flow rate ($\dot{m}$) of plastic material processed by said press (200) is equal to a predefined flow rate value of said plastic material, and wherein said electronic control unit (300) is configured for calculating the duration value (T) of the molding cycle detected, averaged over a number of cycles preceding that observed carried out over a period equal to a submultiple of the average residence time (τ).

FIG.1

EP 3 437 822 A1

FIG.2

EP 3 437 822 A1

FIG.3

Europäisches
Patentamt

European
Patent Office

Office européen
des brevets

# EUROPEAN SEARCH REPORT

Application Number

EP 18 18 5235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 296 21 313 U1 (DIGICOLOR GMBH [DE]) 30 January 1997 (1997-01-30) | 1,2, 8-10,15, 17 | INV. B29C45/18 B29B13/06 B29C45/76 F26B21/04 F26B21/06 F26B21/12 |
| Y | * page 7, last paragraph - page 8, paragraph 1 * <br> * page 5, last paragraph * <br> * figure 1 * | 1-23 | |
| | ----- | | |
| X | EP 2 186 613 A1 (PIOVAN S P A [IT]) 19 May 2010 (2010-05-19) | 1,2, 8-10,15, 17 | ADD. B29C45/00 |
| Y | * paragraph [0018] - paragraph [0034]; figure 1 * | 1-23 | |
| | ----- | | |
| X | EP 2 224 196 A1 (MORETTO SPA [IT]) 1 September 2010 (2010-09-01) | 1,10,17 | |
| Y | * paragraphs [0070], [0071] * <br> * paragraph [0020] - paragraph [0030] * <br> * paragraph [0090] - paragraph [0097] * | 1-23 | |
| | ----- | | |
| X | DE 39 29 858 A1 (MANN & HUMMEL FILTER [DE]) 21 March 1991 (1991-03-21) | 1,2, 8-10,15, 17 | TECHNICAL FIELDS SEARCHED (IPC) B29C B29B F26B |
| Y | * column 3, line 38 - line 63 * <br> * claims 3, 4; figure 1 * | 1-23 | |
| | ----- | | |
| Y | Anonymous: "Injection Molding Reference Guide", Scientific Molding Pocket Guide, fourth edition, 29 March 2016 (2016-03-29), pages 72-73, XP055477711, Retrieved from the Internet: URL:http://www.traininteractive.com/downlo ad/pdf/routsis_injection_molding_reference .pdf [retrieved on 2018-05-23] * page 72 - page 73 * | 1-23 | |
| | ----- | | |

-/--

The present search report has been drawn up for all claims

| Place of search | Date of completion of the search | Examiner |
|---|---|---|
| Munich | 18 December 2018 | Brunswick, André |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................
& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 18 18 5235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2011/050467 A1 (MOLD MASTERS 2007 LTD [CA]; CATOEN BRUCE [CA]; GORGENYI LOUIS [CA]) 5 May 2011 (2011-05-05)<br>* paragraphs [0044], [0047], [0129] *<br>* figures 1-21 * | 1-23 | |
| Y | JP 2004 155116 A (NISSEI PLASTICS IND CO) 3 June 2004 (2004-06-03)<br>* dryer: ref.-no. 107, process conroller: ref.-no. 11;<br>paragraphs [0023], [0028], [0033];<br>figures 1-9 *<br>* paragraphs [0023], [0043], [0044], [0045], [0047], [0050] * | 1-23 | |

TECHNICAL FIELDS
SEARCHED      (IPC)

The present search report has been drawn up for all claims

| Place of search | Date of completion of the search | Examiner |
|---|---|---|
| Munich | 18 December 2018 | Brunswick, André |

EPO FORM 1503 03.82 (P04C01)

page 2 of 2

## ANNEX TO THE EUROPEAN SEARCH REPORT
## ON EUROPEAN PATENT APPLICATION NO.

EP 18 18 5235

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2018

| Patent document cited in search report | | Publication date | Patent family member(s) | | Publication date |
|---|---|---|---|---|---|
| DE 29621313 | U1 | 30-01-1997 | NONE | | |
| EP 2186613 | A1 | 19-05-2010 | NONE | | |
| EP 2224196 | A1 | 01-09-2010 | AT | 532017 T | 15-11-2011 |
| | | | BR | PI1000954 A2 | 21-06-2011 |
| | | | CA | 2693167 A1 | 25-08-2010 |
| | | | CN | 101881554 A | 10-11-2010 |
| | | | EP | 2224196 A1 | 01-09-2010 |
| | | | IT | 1392943 B1 | 02-04-2012 |
| | | | JP | 5905190 B2 | 20-04-2016 |
| | | | JP | 2010195046 A | 09-09-2010 |
| | | | KR | 20100097068 A | 02-09-2010 |
| | | | US | 2010217445 A1 | 26-08-2010 |
| DE 3929858 | A1 | 21-03-1991 | NONE | | |
| WO 2011050467 | A1 | 05-05-2011 | CA | 2779694 A1 | 05-05-2011 |
| | | | CN | 102753327 A | 24-10-2012 |
| | | | EP | 2496397 A1 | 12-09-2012 |
| | | | WO | 2011050467 A1 | 05-05-2011 |
| JP 2004155116 | A | 03-06-2004 | JP | 3776869 B2 | 17-05-2006 |
| | | | JP | 2004155116 A | 03-06-2004 |

EPO FORM P0459

For more details about this annex : see Official Journal of the European Patent Office, No. 12/82